# FASCICULE DE BREVET EUROPEEN

(11) **EP 1 741 590 B1**
(45) Date de publication et mention de la délivrance du brevet: **07.09.2016**
(21) Numéro de dépôt: 05291471.0
(22) Date de dépôt: 06.07.2005
(51) Int. Cl.: B60J 10/00

(54) **Ouvrant de véhicule avec joint**
Fahrzeugöffnungselement mit Dichtung
Vehicle opening element with sealing arrangement

(43) Date de publication de la demande: 10.01.2007
(73) Titulaire: Euramax Industries S.A., 49260 Montreuil-Bellay (FR)
(72) Inventeur: Alzon, Michel, 49260 Montreuil-Bellay (FR)
(74) Mandataire: Le Guen-Maillet

(56) Documents cités:
- CH-A- 203 013
- DE-A1- 4 429 568
- FR-A- 1 064 972
- GB-A- 2 355 279
- NL-C2- 1 011 472
- US-A- 4 989 369
- PATENT ABSTRACTS OF JAPAN vol. 008, no. 061 (M-284), 23 mars 1984 (1984-03-23) & JP 58 211917 A (NISSAN JIDOSHA KK), 9 décembre 1983 (1983-12-09)

## Description

La présente invention concerne un ouvrant de véhicule comprenant un panneau. L'invention concerne aussi un joint de maintien en position d'un tel panneau sur un tel ouvrant, un tel ouvrant est connu de DE10215904 A1.

Un ouvrant d'un véhicule est généralement relié à une partie fixe du véhicule par l'intermédiaire de charnières qui permettent de le manoeuvrer. Cet ouvrant, qui peut être, en particulier, une porte de camping-car, comprend un cadre, généralement constitué d'un profilé en aluminium, sur lequel sont fixés un panneau extérieur et un panneau intérieur. Entre le panneau extérieur et le panneau intérieur peuvent être disposés différents éléments de fonctionnement comme par exemple, un lève-vitre, un haut-parleur, une serrure, etc.

Actuellement le panneau extérieur et le panneau intérieur sont fixés de manière définitive au cadre, par exemple par l'intermédiaire de vis, d'agrafes, de colles ou de tout autre type de moyens de fixation définitive. Ainsi, lorsqu'un des panneaux est détérioré et doit être changé, ou lorsque l'un des éléments de fonctionnement est défectueux et doit être démonté, le démontage de ce panneau peut s'avérer long et entraîner sa détérioration du fait de la nécessité de démonter les vis ou les agrafes ou de retirer la colle.

En outre, les panneaux sont généralement constitués d'une matière thermoplastique dont le coefficient de dilatation est très différent de celui du cadre. Du fait que les panneaux sont fortement liés au cadre, leur dilatation entraîne la déformation de ce dernier ce qui peut conduire à une fatigue du cadre et à un dysfonctionnement des éléments de fonctionnement.

Un objet de la présente invention est de proposer une porte de véhicule qui ne présente pas les inconvénients de l'art antérieur et qui, en particulier, permette de démonter et remonter rapidement et sans destruction le panneau extérieur et/ou le panneau intérieur, tout en garantissant la stabilité générale du cadre en cas de dilatation.

A cet effet, est proposé un ouvrant de véhicule selon la revendication 1.

Le cadre comprend un moyen de maintien en position du joint et le panneau comprend un moyen de blocage par rapport au joint.

Le panneau comprend un moyen de maintien en position du joint et le cadre comprend un moyen de blocage par rapport au joint.

Le joint a une forme convexe ouverte orientée vers l'élément portant le moyen de blocage.

Avantageusement, le moyen de blocage et/ou le moyen de maintien sont de forme discontinue le long du pourtour du panneau.

Le joint a une forme convexe ouverte orientée vers l'élément, panneau ou cadre, sur lequel le joint n'est pas maintenu.

Pas compris dans l'invention, il est propose aussi un procédé de mise en position d'un panneau sur un cadre d'ouvrant de véhicule, le procédé comprenant:
- une étape de mise en position d'un joint sur le cadre de manière à forme une boucle à l'intérieur du cadre;
- une étape d'insertion du panneau à l'intérieur de la boucle ainsi formée; et
- une étape de blocage du panneau par rapport au joint.

Un procédé de mise en position d'un panneau sur un cadre d'ouvrant de véhicule est décrit, le procédé comprenant:
- une étape de mise en position d'un joint sur le pourtour du panneau;
- une étape d'insertion du panneau et du joint à l'intérieur du cadre; et
- une étape de blocage du joint par rapport au cadre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente un ouvrant de véhicule selon l'invention vu de l'intérieur de celui-ci;
la Fig. 2 est une vue en coupe de l'ouvrant selon la ligne II-II de la Fig. 1;
la Fig. 3 est un agrandissement du détail III de la Fig. 2;
la Fig. 4 est une vue similaire à celle de la Fig. 3 pour un autre mode de réalisation de l'invention; et
la Fig. 5 est une vue similaire à celle de la Fig. 3 lorsque le panneau intérieur est dilaté.

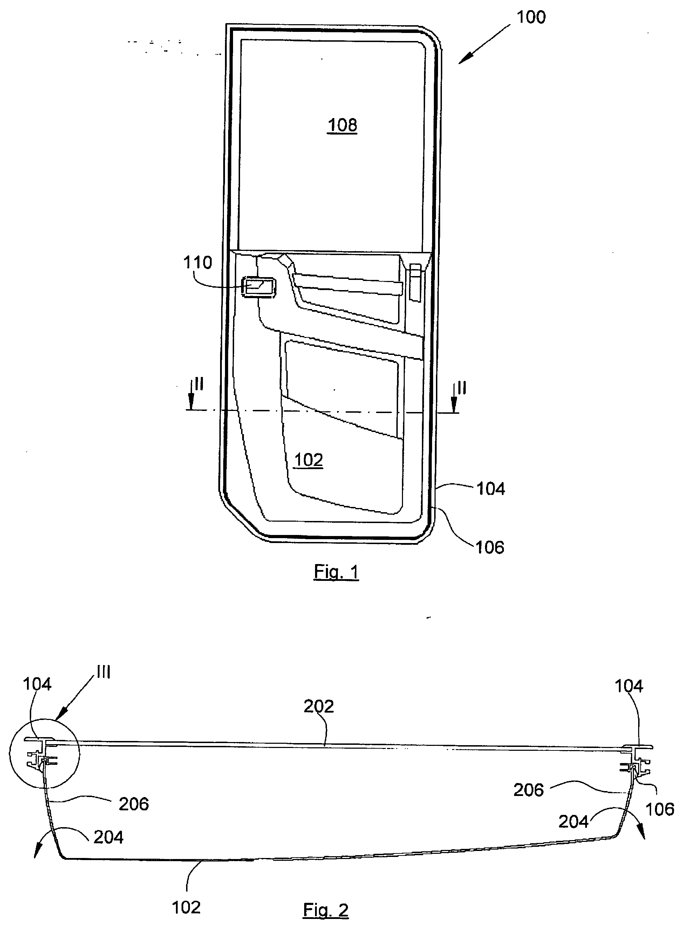

La Fig. 1 représente un ouvrant 100 de véhicule. Dans le mode de réalisation de l'invention représenté à la Fig. 1, l'ouvrant est ici une porte 100 de camping-car, mais l'invention peut s'appliquer à toutes sortes de véhicule comme par exemple une voiture, un camion, une caravane ou autres. Plutôt qu'une porte, cet ouvrant peut également être un capot ou un ouvrant de coffre.

Dans l'exemple de réalisation de l'invention, la porte 100 comprend une vitre 108 actionnée par un lève-vitre (non représenté) disposé à l'intérieur de la porte 100 et une poignée 110 qui permet d'ouvrir la porte 100 en manoeuvrant une serrure (non représentée).

La porte représentée 100 comprend un cadre 104 sous forme d'un profilé, par exemple en aluminium, qui sert d'élément structurel à la porte 100. Sur le cadre 100 sont fixés un panneau intérieur 102 et un panneau extérieur 202 (Fig. 2).

Le panneau intérieur 102 qui sert de panneau de garnissage intérieur, s'étend ici sur toute la surface de la porte 100 exception faite de l'évidement permettant la mise en place de la vitre 108, mais il pourrait s'étendre uniquement sur la partie basse de la porte 100, par exemple dans le cas d'une porte de voiture.

Le maintien en position du panneau intérieur 102 sur le cadre est assuré par un joint de maintien en position 106 qui est décrit ci-après et qui s'étend sur tout le pourtour du panneau intérieur 102 afin d'assurer une étanchéité entre l'intérieur de la porte 100 et l'intérieur du véhicule.

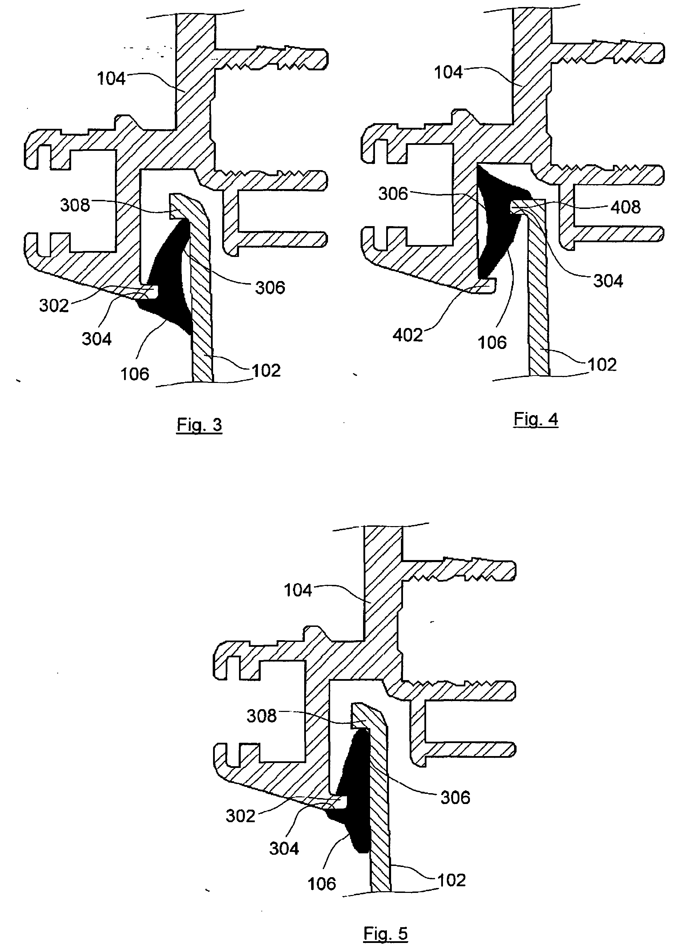

La Fig. 3 montre un agrandissement de la zone du joint de maintien en position 106.

Le cadre 104 comprend un moyen de maintien qui maintient le joint 106 en position par rapport au cadre 104.

Le panneau intérieur 102 comprend un moyen de blocage qui, lorsqu'il vient en contact avec le joint 106, bloque le panneau intérieur 102 par rapport au joint 106.

A cet effet, le joint 106 qui peut, par exemple, être réalisé en EPDM, comprend, d'une part, un premier dispositif complémentaire du moyen de maintien et qui coopère avec celui-ci afin de maintenir le joint 106 en position, et, d'autre part, un deuxième dispositif complémentaire du moyen de blocage et qui coopère avec celui-ci afin d'empêcher le désassemblage involontaire du panneau intérieur 102.

Le moyen de maintien du cadre 104 prend ici la forme d'un ergot 302 s'étendant vers le panneau intérieur 102 et sur lequel s'emmanche le premier dispositif du joint 106 qui prend ici la forme d'une rainure 304, permettant ainsi le maintien du joint 106 sur le cadre 104. Pour éviter le décrochement du joint 106 du cadre 104 lors de la mise en place ou l'enlèvement du panneau intérieur 102, la mise en place du joint 106 s'effectue orthogonalement par rapport à la direction d'assemblage et à la direction de désassemblage du panneau intérieur 102.

Le moyen de blocage du panneau intérieur 102 prend ici la forme d'une saillie 308 orientée vers le cadre 104 et venant se bloquer sur le deuxième dispositif du joint 106 qui prend ici la forme d'une semelle 306, permettant ainsi le maintien du panneau intérieur 102 par rapport au joint 106.

Ainsi, le joint 106 est pris en sandwich entre le cadre 104 et le panneau intérieur 102.

La Fig. 4 montre un agrandissement de la même zone que celui de la Fig. 3 pour un autre mode de réalisation de l'invention.

Dans ce mode de réalisation de l'invention, le panneau intérieur 102 comprend un moyen de maintien qui maintient le joint 106 en position par rapport au panneau intérieur 102.

Le cadre 104 comprend un moyen de blocage qui, lorsqu'il vient en contact avec le joint 106, bloque le joint 106 et le panneau intérieur 102 par rapport au cadre 104.

A cet effet, le joint 106 comprend alors, d'une part, un premier dispositif complémentaire du moyen de maintien et qui coopère avec celui-ci afin de maintenir le joint 106 en position, et, d'autre part, un deuxième dispositif complémentaire du moyen de blocage et qui coopère avec celui-ci afin d'empêcher le désassemblage involontaire du panneau intérieur 102.

Le moyen de maintien du panneau intérieur 102 prend ici la forme d'un ergot 408 s'étendant vers le cadre 104 et sur lequel s'emmanche le premier dispositif du joint 106 qui est ici la rainure 304, permettant ainsi le maintien du joint 106 sur le panneau intérieur 102.

Le moyen de blocage du cadre 104 prend ici la forme d'une saillie 402 orientée vers le panneau intérieur 102 et venant se bloquer sur le deuxième dispositif du joint 106 qui est ici la semelle 306, permettant ainsi le maintien du panneau intérieur 102 et du joint 106 par rapport au cadre 104. Pour éviter le décrochement du joint 106 du panneau intérieur 102 lors de la mise en place ou l'enlèvement de ce dernier, la mise en place du joint 106 s'effectue orthogonalement par rapport à la direction d'assemblage et à la direction de désassemblage du panneau intérieur 102.

Ainsi, le joint 106 est pris en sandwich entre le cadre 104 et le panneau intérieur 102.

De préférence, l'ergot 302 et la saillie 308 s'étendent sur tout le pourtour du panneau intérieur 102, mais il est possible que ces éléments s'étendent de manière discontinue sur ce pourtour, l'ergot 302 du cadre 104 s'étendant en vis-à-vis de la rainure 304 du joint 106 et la saillie 308 du panneau intérieur 102 s'étendant en vis-à-vis de la semelle 306 du joint 106. De manière générale, le moyen de blocage et/ou le moyen de maintien peuvent être de forme discontinue le long du pourtour du panneau 102.

Dans le mode de réalisation de l'invention représenté à la Fig. 3, un procédé de mise en position d'un panneau intérieur 102 sur un cadre 104 comprend:
- une étape de mise en position d'un joint 106 sur le cadre 104 par emmanchement d'au moins une rainure 304 que compte ce joint 106 sur au moins un ergot 302 du cadre 104 de manière à ce que le joint 106 forme une boucle à l'intérieur du cadre 104;
- une étape d'insertion du panneau intérieur 102 à l'intérieur de la boucle ainsi formée; et
- une étape de blocage du panneau intérieur 102 sur le joint 106 par blocage de la saillie 308 du panneau intérieur 102 par rapport à la semelle 306 du joint 106.

Lors de l'étape d'insertion, la saillie 308 du panneau intérieur 102 est insérée dans la boucle depuis la face du joint 106 orientée vers l'intérieur du véhicule jusqu'à venir dépasser la face du joint 106 orientée vers l'intérieur de la porte 100. En d'autres termes, la saillie 308 est insérée jusqu'à venir au-delà du joint 106 par rapport à l'intérieur du véhicule.

Dans le mode de réalisation de l'invention représenté à la Fig. 4, un procédé de mise en position d'un panneau intérieur 102 sur un cadre 104 comprend:
- une étape de mise en position du joint 106 sur le pourtour du panneau intérieur 102 par emmanchement d'au moins une rainure 304 que compte ce joint 106 sur au moins un ergot 408 du panneau intérieur 102 de manière à ce que le joint 106 forme une boucle à l'extérieur du pourtour du panneau intérieur 102;
- une étape d'insertion du panneau intérieur 102 et du joint 106 à l'intérieur du cadre 104; et
- une étape de blocage du joint 106 par rapport au cadre 104 par blocage de la semelle 306 du joint 106 sur la saillie 402 du cadre 104.

Lors de l'étape d'insertion, la semelle 306 du joint 106 est insérée à l'intérieur du cadre 104 depuis la face de la saillie 402 orientée vers l'intérieur du véhicule jusqu'à venir dépasser la face de la saillie 402 orientée vers l'intérieur de la porte 100. En d'autres termes, la semelle 306 du joint 106 est insérée jusqu'à venir au-delà de la saillie 402 par rapport à l'intérieur du véhicule.

Comme cela est représenté à la Fig. 2, le panneau intérieur 102 comprend des flancs 206 qui sont de préférence conformés pour s'écarter vers l'extérieur comme cela est représenté par les flèches 204 de manière à ce que le joint 106 soit coincé entre le panneau intérieur 102 et le cadre 104.

La mise en place du panneau intérieur 102 est facilitée par la flexibilité du joint 106. En effet, dans le mode de réalisation représenté à la Fig. 3, cette flexibilité autorise le passage du panneau intérieur 102 à l'intérieur de la boucle et en particulier de la saillie 308 qui vient se positionner au-delà de la face de la semelle 306 du joint 106 orientée vers l'intérieur de la porte 100. Dans le mode de réalisation représenté à la Fig. 4, cette flexibilité autorise le passage du panneau intérieur 102 et du joint 106 à l'intérieur du cadre 104 et en particulier de la semelle 306 du joint 106 qui vient se positionner au-delà de la face de la saillie 402 du cadre 104 orientée vers l'intérieur de la porte 100.

La mise en place du panneau intérieur 102 sur le cadre 104 est ainsi facilitée et rapide. Quant à son démontage, il est également facilité du fait qu'il n'y a aucune liaison définitive entre le panneau intérieur 102 et le cadre 104 et que de simples déformations élastiques du panneau intérieur 102 et du joint 106 permettent ce démontage rapidement et sans détérioration.

Comme cela a été explicité ci-dessus, le panneau intérieur 102 est généralement en une matière thermoplastique alors que le cadre 104 est généralement en aluminium, si bien que les coefficients de dilatation respectifs sont très différents, ce qui peut entraîner, dans le cas d'assemblage de porte conforme à l'état de la technique, des déformations du cadre 104.

La Fig. 5 représente le même mode de réalisation de l'invention que celui de la Fig. 3, mais lorsque le panneau intérieur 102 a subi des déformations dues, par exemple, à sa dilatation sous l'effet de la chaleur. En effet, le panneau intérieur 102 s'est déplacé relativement au cadre 104 du fait des différences de leurs coefficients de dilatation respectifs. La mise en place d'un élément souple comme le joint 106 permet d'absorber les déformations du panneau intérieur 102 par écrasement du joint 106, évitant ainsi les déformations du cadre 104.

Pour augmenter l'effet d'absorption des déformation par le joint 106, la semelle 306 de celui-ci a une forme convexe ouverte dans la direction opposée au premier dispositif du joint 106, c'est-à-dire ici dans la direction opposée à la rainure 304. En d'autres termes, le joint 106 a une forme convexe ouverte en direction de l'élément portant le moyen de blocage, à savoir le panneau intérieur 102 dans le cas de la Fig. 3 et le cadre 104 dans le cas de la Fig. 4. En d'autres termes, le joint 106 a une forme convexe ouverte orientée vers l'élément, panneau 102 ou cadre 104, sur lequel le joint 106 n'est pas maintenu par un moyen de maintien 302, 408. Lors de sa dilatation, le panneau intérieur 102 se déplace vers le cadre 104, ce qui provoque l'écrasement du joint 106 qui perd alors sa forme convexe.

Cette forme convexe de la semelle 306 permet en outre au joint 106 d'avoir une fonction ressort qui pousse les parois 206 du panneau intérieur 102 dans des directions opposées aux flèches 204, augmentant ainsi la stabilité du panneau intérieur 102. Cette fonction permet en outre, d'absorber les jeux de conception du cadre 104 et du panneau intérieur 102.

En outre, le joint 106 absorbe les vibrations dues au roulage du véhicule, garantissant ainsi une réduction des bruits à l'intérieur du véhicule.

Cette forme convexe permet aussi, en cas de contraction du panneau intérieur 102 sous l'effet du froid, d'absorber cette déformation et évite ainsi au panneau intérieur 102 de se désassembler du cadre.

Dans les différents modes de réalisation de l'invention, le joint 106 peut être monomatière ou multimatière.

Bien entendu, la présente invention n'est pas limitée aux exemples et modes de réalisation décrits et représentés, mais elle est susceptible de nombreuses variantes accessibles à l'homme du métier.

Par exemple, l'invention a été plus particulièrement décrite dans le cas d'un panneau intérieur de porte, mais elle peut s'appliquer de la même façon à un panneau extérieur.

Le dispositif de maintien du joint sur le cadre, dans l'exemple de réalisation de l'invention de la Fig. 3, et le dispositif de maintien du joint sur le panneau intérieur, dans l'exemple de réalisation de l'invention de la Fig. 4 ont été décrits comme des ergots coopérant avec une rainure du joint, mais il peut s'agir, à l'inverse, de rainures dans lesquelles viennent s'insérer des excroissances du joint.

## Revendications

1. Ouvrant de véhicule (100) comportant:
- un cadre (104);
- un panneau (102), fixé sur le cadre (104),
et
- un joint (106) adapté à maintenir en position le panneau (102) sur le cadre (104), et présentant une rainure (304) destinée à recevoir un ergot (302, 408) de l'un parmi le cadre (104) ou le panneau (102),
l'ouvrant (100) étant **caractérisé en ce que** le joint (106) présente une forme convexe ouverte dans la direction opposée à la rainure (304) et orientée vers l'autre parmi le panneau (102) ou le cadre (104), chacune des deux extrémités de la forme convexe ouverte présentant une surface venant en appui contre l'autre parmi le panneau (102) ou le cadre (104).

2. Ouvrant de véhicule (100) selon la revendication 1, **caractérisé en ce que** ledit autre parmi le panneau (102) ou le cadre (104) comprend un moyen (308, 402) de blocage par rapport au joint (106) prenant la forme d'une saillie orientée vers ledit un parmi le cadre (104) ou le panneau (102).

3. Ouvrant de véhicule (100) selon la revendication 2, **caractérisé en ce que** le moyen de blocage et/ou le moyen de maintien sont de forme discontinue le long du pourtour du panneau (102).

4. Véhicule comportant un ouvrant (100) selon l'une des revendications 1 à 3.

## Patentansprüche

1. Fahrzeugöffner (100) beinhaltend:
- einen Rahmen (104)
- ein, auf dem Rahmen (104) befestigtes Blatt (102) und
- eine Dichtung (106), die geeignet ist, das Blatt (102) auf dem Rahmen (104) in Position zu halten und die eine Rille (304) aufweist, die zur Aufnahme eines Nockens (302, 408) an einem von beiden, das heißt, an dem Rahmen (104) oder an dem Blatt (102) bestimmt ist,
wobei der Öffner (100) **dadurch gekennzeichnet ist, dass** die Dichtung (106) eine konvexe Form aufweist, die in der, der Rille (304) entgegengesetzten Richtung offen ist und auf das andere von beiden, das heißt auf das Blatt (102) oder auf den Rahmen (104) gerichtet ist,
wobei jedes der beiden Enden der konvexen offenen Form eine Oberfläche aufweist, die sich auf das andere von beiden, das heißt auf das Blatt (102) oder auf den Rahmen (104) abstützt.

2. Fahrzeugöffner (100) nach Patentanspruch 1, **dadurch gekennzeichnet, dass** das genannte andere von beiden, das heißt, das Blatt (102) oder der Rahmen (104) in Bezug auf die Dichtung (106) ein Blockiermittel (308, 402) umfasst, das die Form eines, auf das genannte eine von beiden, das heißt, auf den Rahmen (104) oder auf das Blatt (102), gerichtetenVorsprungs annimmt.

3. Fahrzeugöffner (100) nach Patentanspruch 2, **dadurch gekennzeichnet, dass** das Blockiermittel und/oder das Haltemittel entlang des Blattrands eine diskontinuierliche Form aufweisen.

4. Fahrzeug beinhaltend einen Öffner (100) nach einem der Patentansprüche 1 bis 3.

## Claims

1. Vehicle opening leaf (100) comprising:
- a frame (104);
- a panel (102) fixed to the frame (104), and
- a seal (106) adapted to keep the panel (102) in position on the frame (104) and having a groove (304) intended to receive a lug (302, 408) of the one element among the frame (104) or the panel (102),
the opening leaf (100) being **characterized in that** the seal (106) has a convex shape open in the opposite direction to the groove (304) and oriented towards the other element among the panel (102) or the frame (104), each of the two ends of the open convex shape having a surface bearing against the other element among the panel (102) or the frame (104).

2. Vehicle opening leaf (100) according to Claim 1, **characterized in that** the said other element among the panel (102) or the frame (104) comprises a means (308, 402) for locking with respect to the seal (106) that takes the shape of a projection oriented towards the said one element among the frame (104) or the panel (102).

3. Vehicle opening leaf (100) according to Claim 2, **characterized in that** the locking means and/or the retaining means are of discontinuous shape along the periphery of the panel (102).

4. Vehicle comprising an opening leaf (100) according to one of Claims 1 to 3.
